# EUROPÄISCHE PATENTSCHRIFT

(11) **EP 1 849 524 B1**
(45) Veröffentlichungstag und Bekanntmachung des Hinweises auf die Patenterteilung: **07.09.2016**
(21) Anmeldenummer: 07104116.4
(22) Anmeldetag: 14.03.2007
(51) Int. Cl.: B04B 9/12

(54) **Dichtungsanordnung für eine Zentrifuge**
Sealing assembly for a centrifuge
Agencement d'étanchéité pour une centrifugeuse

(30) Priorität: 25.04.2006 EP 06405176
(43) Veröffentlichungstag der Anmeldung: 31.10.2007
(73) Patentinhaber: Ferrum AG, CH-5102 Rupperswil (CH)
(72) Erfinder: Stefan, Libor, 50011 Hradec Kralové 11 (CZ); Schneider, Sandro M.O.L., 880 Thalwil (CH); Busch, Gernot, 5078 Effingen (CH)
(74) Vertreter: Intellectual Property Services GmbH

(56) Entgegenhaltungen:
- EP-A2- 0 144 904
- DE-C- 919 700

## Beschreibung

Die Erfindung betrifft eine Lösung für die Lagerung einer Antriebswelle für einen drehbaren Laufkorb sowie die Abdichtung dieser Lagerung. Der drehbare Laufkorb ist Bestandteil einer Zentrifuge, insbesondere einer Schälzentrifuge vertikaler Bauart.

Eine derartige Zentrifuge ist ein Beispiel für ein Mittel zur Durchführung einer Trennung eines Fest-flüssig Gemisches in seine festen und flüssigen Bestandteile. Beim Zentrifugieren, einem Trennverfahren zur Abtrennung von festen Bestandteilen aus einer Flüssigkeit, wird das fest-flüssig Gemisch in Rotation versetzt. Die auf den Feststoff und die Flüssigkeit wirkenden Fliehkräfte führen zu einer Erhöhung der Sedimentationsgeschwindigkeit. Im Gegensatz zur Sedimentation der festen Bestandteile des Gemisches durch die auf den Partikeln angreifende Schwerkraft werden die Feststoffpartikel durch die Einwirkung von Fliehkräften in einer zur Drehachse normalen Ebene von der Drehachse wegbewegt. Die Partikel werden in einem rotationssymmetrisch um die Drehachse aufgespannten Filter aufgefangen. Der Filter liegt im Mantel eines in den meisten Fällen zylindrisch ausgestalteten Laufkorbes auf oder alternativ dazu ist der Laufkorb selbst als Filter ausgestaltet. Der Laufkorb enthält Durchtrittsöffnungen für die Flüssigkeit, welche von der Aussenwand des Laufkorbs in Richtung des ortsfesten Gehäuses der Zentrifuge weggeschleudert wird. Bei einem Trennverfahren zur Abtrennung der festen Bestandteile des fest-flüssig Gemisches in einer Zentrifuge laufen die folgenden Prozessschritte ab:
Die Zentrifuge wird über eine Befülleinreichtung wie ein Füllrohr mit einer Lösung befüllt, die abzutrennende Feststoffpartikel enthält. Die Lösung wird in den Innenraum des Laufkorbs eingetragen. In einem weiteren Schritt erfolgt ein Schleuderschritt zur Trennung der Flüssigkeit von den festen Partikeln. An der Innenseite der Aussenwand des Laufkorbs setzen sich die Partikel als Kuchen ab, die Flüssigkeit tritt durch dafür vorgesehene Öffnungen im Laufkorb aus und wird in einem den Laufkorb umschliessenden Behälter gesammelt. Der Filterkuchen kann von Lösungsmittelresten durch einen Waschvorgang gereinigt werden. Waschflüssigkeit wird auf den Filterkuchen gesprüht. Durch die Rotation wird die Waschflüssigkeit aus dem Filterkuchen ausgetrieben. Zusätzlich werden durch den Waschvorgang eventuell in dem Filterkuchen vorhandene Lösungsmittelreste ausgeschwemmt. Derartige Lösungsmittel sollen in vielen Fällen aus gesundheitlichen oder ökologischen Gründen oder Gesichtspunkten der Entflammbarkeit des Produkts und seiner weiteren Verarbeitbarkeit nicht im Filterkuchen nachweisbar sein. Nach dem Waschvorgang wird der Filterkuchen von der Innenseite der Aussenwand des Laufkorbes abgezogen, was in der Fachwelt als Schälen bezeichnet wird. Dazu fährt ein Schälmittel entlang der Innenwand des langsam rotierenden Laufkorbes und entnimmt den Filterkuchen. Der Filterkuchen verlässt den Zentrifugenraum bei einer nach unten entleerenden vertikalen Schälzentrifuge durch Öffnungen im Zentrifugenboden. Anschliessend wird die Innenseite der Aussenwand des Laufkorbes gereinigt, sodass Restschichten entfernbar sind.

Aus dem Stand der Technik ist eine Dichtungsanordnung für einen drehbaren Laufkorb einer Vertikalzentrifuge, umfassend eine Antriebswelle, die entlang einer im wesentlichen vertikalen Drehachse des drehbaren Laufkorbs angeordnet ist aus EP0144904 A2 bekannt. Der Laufkorb umfasst eine Laufkorbnabe, wobei die Laufkorbnabe drehfest mit der Antriebswelle verbunden ist und den drehbaren Laufkorb trägt. Ein erstes Lager dient zur Aufnahme der durch die Drehbewegung des Laufkorbs entstehenden Kräfte. Zumindest ein zweites Lager dient zur Aufnahme der in Richtung der Drehachse angreifenden Kräfte. Die Antriebswelle ist in einem ortsfesten Gehäuseteil der Zentrifuge gelagert, der fortan als Wellenrohr bezeichnet werden soll. Das Wellenrohr erstreckt sich entlang zumindest eines Teils der Antriebswelle. Das erste und das zweite Lager sind zwischen Antriebswelle und Wellenrohr angeordnet.

Aus dem Stand der Technik ist des weiteren bekannt, einen Spalt zwischen dem ortsfesten Wellenrohr und der rotierenden Laufkorbnabe vorzusehen. Die kraftübertragenden Lager sind an dem Ende der Antriebswelle angeordnet, das mit der Lagerkorbnabe gekoppelt ist. Ein Führungslager ist in der Nähe des Endes der Antriebswelle angeordnet, welches mit der Antriebsvorrichtung verbunden ist. Zumeist ist auf diesem Ende der Antriebswelle eine Keilriemenscheibe angeflanscht, die einen Keilriemen trägt, der von einem Elektromotor angetrieben wird. Das Führungslager befindet sich somit zwischen der Antriebswelle und dem Wellenrohr. Der Innendurchmesser des Wellenrohrs ist dementsprechend nur unwesentlich geringer als der Aussendurchmesser der auf der Antriebswelle aufgezogenen Lager.

Ein Problem, welches bei einer Dichtungsanordnung gemäss des Standes der Technik auftritt, besteht darin, dass die Welle sowohl auf Torsion als auch auf Biegung beansprucht wird. Zusätzlich muss die Welle auch alle dynamischen Kräfte aufnehmen, welche durch die Bewegung des Lagerkorbs in die Welle eingeleitet werden. Insbesondere bei schnellaufenden Zentrifugen mit Drehzahlen im Bereich von 700 bis 2700 U/min ergibt sich eine hohe Biegewechselspannung, welche eine ausreichende Dimensionierung der Welle erfordert. Der notwendige Wellendurchmesser erfordert dann die Auswahl von dementsprechend grossen Lagern, was auch den Innendurchmesser der Laufkorbnabe vergrössert. Demzufolge ist es bei Lösungen aus dem Stand der Technik erforderlich, die Lager direkt auf der Welle anzuordnen, da sich durch deren Innendurchmesser beträchtliche Umfangsgeschwindigkeiten ergeben. Des weiteren müssen Dichtungen ebenfalls direkt an der Welle oder über sich mit der Welle mitbewegende Hülsen mit kleinstmöglichem Dichtungsdurchmesser angeordnet werden. Durch die Zunahme der Umfangsgeschwindigkeit infolge der erforderlichen zulässigen Wellendurchmesser entsteht in der Dichtung eine derart hohe Reibungswärme, die selbst über eine Fettschmierung der Dichtung nicht auf das zulässige Mass reduzierbar ist, sodass das Dichtungsmaterial versagt. Selbst Lippendichtungen aus PTFE sind mit Fettschmierung nur in Temperaturbereichen bis zu 250°C beständig, darüber kommt es zum Versagen durch Oxidationsreaktionen (Verbrennung der Dichtung).

Die konstruktive Lösung aus dem Stand der Technik besteht darin, die Dichtungen an der Welle in unmittelbarer Nähe der Aufhängung des Laufkorbs anzuordnen, wodurch sichergestellt wird, dass die Umfangsgeschwindigkeit im Dichtungsbereich unterhalb der maximal für die Dichtung zulässigen Umfangsgeschwindigkeit zu bleiben. Durch diese konstruktive Einschränkung erhält man eine Lösung, bei welcher die Dichtungen zwischen Welle und einem feststehenden Gehäuseteil, einem in der Folge als Wellenrohr bezeichneten Bauteil, angeordnet sind. Die Dichtungen sind in unmittelbarer Nähe zu den Lagern angeordnet, sodass der abzudichtende Wellenabschnitt möglichst auf den Abschnitt zwischen dem antriebsseitigen Lager und dem oder den Lagern in der Nähe der Aufhängung des Lagerkorbs beschränkt ist. Der Dichtung kommt somit die Funktion der Abdichtung der Lager gegen Verunreinigungen, sowie die Abdichtung gegen den Austritt von Schmiermittel zu, welches für die Schmierung der Lager erforderlich ist. Mittels Schmiermittelbohrungen im Inneren des Wellenrohrs wird Schmiermittel zu den Lagern transportiert. Diese Schmiermittelbohrungen sind nachteilig, da ihre Herstellung mit hohem Aufwand verbunden ist. Insbesondere bei Zentrifugen mit grösseren Abmessungen, bei welchen Wellen mit einer Gesamtlänge von mehr als 1000 mm zum Einsatz kommen, sind die Bohrungen von langen Kanälen mit geringem Durchmesser fertigungstechnisch aufwändig herzustellen. Zudem müssen diese Bohrungen derart ausgestaltet sein, dass eine Verstopfung im Betrieb auszuschliessen ist, da für eine Reinigung der Schmiermittelbohrungen sonst unter Umständen die Demontage des Lagerkorbs, sowie der Lager selbst erforderlich ist.

Ein weiterer Nachteil ist darin begründet, dass durch den Spalt gemäss der Ausführungsform nach dem Stand der Technik Verunreinigungen aller Art in den Lagerraum gelangen können. Diese Verunreinigungen entstehen insbesondere durch Partikel, die beim Entladen der Zentrifuge in den Spalt gelangen, sowie durch Spül- oder Reinigungsmittel. Bei Produktwechseln ist es notwendig, den gesamten Zentrifugenraum zu spülen. Der Zentrifugeninnenraum wird geflutet, sodass Staub, Verunreinigungen und dergleichen in den Spalt zwischen Laufkorbnabe und Wellenrohr gelangen können und dort verbleiben, sodass der Zwischenraum zwischen dem drehbarem Laufkorb und dem Wellenrohr verstopfen kann. In der Folge kann es nicht nur zu Schwierigkeiten beim Anfahren durch erhöhte Reibungswiderstände insbesondere bei harten, kristallinen Produkten kommen, was im Betrieb durch dynamische Kräfte zu einer Krafteinleitung in die Lager führen kann, die unzulässige Lagerbelastungen zur Folge haben, die im Extremfall zum Versagen der Lager führen können, sondern auch zu Kontamination des Produkts durch Schmutzpartikel, die während des Betriebs aus dem Spalt ausgetragen werden. Die Kontamination des Produkts ist insbesondere für die Lebensmittelbranche als auch für pharmazeutische Produkte gänzlich auszuschliessen. Mit der Konstruktionslösung nach dem Stand der Technik ist aber der Spalt zwischen Lagerkorbnabe und und Wellenrohr zwangsläufig vorhanden. Eine Abdichtung des Spalts gelingt einerseits wegen der hohen Umfangsgeschwindigkeit des Lagerkorbs nicht, da das oben beschriebene Problem auftreten würde. Andererseits gelingt die Abdichtung auch schon deswegen nicht, weil der Lagerkorb fliegend auf der Welle gelagert ist, was zur Folge hat, dass der Laufkorb im Betrieb Auslenkungen bis zu einigen Millimetern um seine Ruhelage erfährt. Die leistungsfähigsten Lippendichtungen erlauben aber eine dynamische Exzentrizität von maximal 0,1 mm bei 1000 U/min. Diese Exzentrizität nimmt mit zunehmender Drehzahl weiter ab, sodass bei 3000 U/min nur noch maximal 0,05 mm tolerierbar sind. Aufgrund der vorstehenden Ausführungen ergibt sich, dass ein offener Spalt zwischen Wellenrohr und Laufkorbnabe konstruktiv zur Zeit nicht vermieden werden kann.

Ein weiteres Problem der Verunreinigungen stellt die Korrosion dar, die alle Teile des Lagerblocks, also der Gesamtheit von Wellenrohr, Lagern, Dichtungen sowie Verbindungsteile zur Befestigung und Zentrierung derselben erfassen kann, insbesondere wenn durch derartige Verunreinigungen verursachte Verstopfungen einer Inspektion nicht ohne Demontage des Laufkorbs von der Antriebswelle oder sogar des Lagerblocks selbst zugänglich sind. Die Korrosion kann auch bei Einwirkung von Betriebsmedien im stark sauren oder basischen Bereich die Dichtungen der Lager erfassen, sodass die Dichtungen im Dauerbetrieb in Mitleidenschaft gezogen werden, wodurch eine Langzeitdichtung der Wellenlager nicht gewährleistet werden kann. Zwar sollten Dichtungen aus PTFE eine ausreichende Chemikalienbeständigkeit aufweisen, allerdings stellen abrasive Partikel in Kombination mit chemisch reaktiven Substanzen bei durch die hohen Umfangsgeschwindigkeiten entstehenden Reibungskräften eine starke Belastung für jede Dichtung dar, insbesondere dann, wenn derartige hochreaktive Substanzen über eine längere Zeit dauernd auf die Dichtung einwirken.

Aus dem Stand der Technik ist daher bekannt, Spüldüsen in dem Spalt zwischen Zylindertrommelnabe und Lagerblock vorzusehen. Die Anordnung dieser Spüldüsen ist aufgrund des beschränkten Platzangebots im Lagerblock aufwändig. Zudem können die Spüldüsen durch Verunreinigungen bedingte Verstopfung unbrauchbar werden, sodass alle bisher aufgeführten Probleme auch bei dieser verbesserten Lösung auftreten können. Aus obengenannten Gründen ist eine Spülung und/oder ein Fluten des Zwischenraums zwischen Laufkorbnabe und Lagerblock nachteilig, weil der Spalt schlecht für die Reinigung und nachfolgende Inspektion zugänglich ist und in der Folge mit dementsprechend langen Umrüstzeiten gerechnet werden muss. Ein Produktwechsel kann z.B. für in der pharmazeutischen Industrie oder der Lebensmittelindustrie einzusetzende Produkte nur dann erfolgen, wenn nachgewiesen werden kann, dass in der das Produkt verarbeitenden Vorrichtung keine Spuren der vorhergehendnen Charge oder anderer Verunreingungen nachweisbar sind. Ein Spalt, in welchem sich derartige Produktreste und/oder Verunreinigungen absetzen können, ist daher soweit wie möglich, zu vermeiden. Sollte es aus konstruktiven Gründen nicht möglich sein auf einen derartigen Spalt zu verzichten, wiedas vorhergehende Beispiel der Zentrifuge zeigt, ist gemäss der Vorschriften für pharmazeutische Produkte oder Vorstufen von pharmazeutischen Produkten erforderlich, die vollständige Reinigung des Spalts mittels eines Analyseverfahrens, welches die tatsächlichen Verhältnisse im Spalt wiedergibt, nachzuweisen, beispielsweise durch Ermittlung der Konzentration und/oder der Zusammensetzung der Verunreinigungen. Im Rahmen eines derartigen Tests wird beispielsweise eine Probe von einer der Oberflächen, welche den Spalt begrenzen, genommen und über Laboranalysen der Reinheitsgrad der Oberfläche ermittelt.

Eine derartige Analyse ist praktisch ohne die vollständige Demontage des Laufkorbs sowie des Lagerblocks der Zentrifuge gemäss dem Ausführungsbeispiel nach dem Stand der Technik nicht möglich. Die Gestaltung des Lagerblocks ist durch die mechanische Beanspruchung durch den Betrieb im überkritischen Drehzahlbereich und das mehrmalige Durchlaufen des kritischen Drehzahlbereichs der Antriebswelle vorgegeben. Die Gewährleistung der notwendigen Laufruhe im Betrieb erfordert somit bei der Demontage des Lagerblocks und des Laufkorbs grösstmögliche Sorgfalt. Die gesamte Umrüstzeit auf ein neues Produkt, welche die vorhin beschriebene Reingung und Analyse umfasst, macht einen wesentlichen, wenn nicht den Hauptanteil der Zykluszeit aus, insbesondere, wenn kleine Chargen jeweils verschiedenartiger Produkte zentrifugiert werden müssen. Dementsprechend verweilt die Zentrifuge über lange Perioden in einem unproduktiven Nicht-Betriebszustand, was einen erheblichen Kostennachteil zur Folge hat.

Daher ist es eine Aufgabe der Erfindung, den Zwischenraum zwischen Zylindertrommelnabe und Lagerblock derartig abzuschirmen, dass ein Eintritt von Verunreinigungen in den Zwischenraum unterbunden wird.

Es ist eine weitere Aufgabe der Erfindung, die auf die Welle einwirkenden Kraftkomponenten zu verringern.

Die Lösung der Aufgabe ergibt sich aus dem kennzeichnenden Teil von Anspruch 1. Die Dichtungsanordnung nach Anspruch 1 für einen um eine Drehachse drehbar angeordneten Laufkorb einer Zentrifuge umfasst den Laufkorb, der über eine Laufkorbnabe mit einer sich entlang der Drehachse in einem Lagerblock erstreckenden, an eine Antriebseinheit angekoppelten Antriebswelle über eine Aufhängung des Laufkorbs drehfest verbunden ist. Antriebsseitig ist zwischen der Laufkorbnabe und dem Lagerblock eine Dichtung zur Abdichtung eines Spalts zwischen Lagerblock und Laufkorbnabe vorgesehen.

Auf die Antriebswelle wirken im Betriebszustand kombinierte statische und dynamische Kräfte. Die dynamischen Kräfte umfassen dabei zeitlich veränderliche Kräfte. Die Unwuchtkraft kann allerdings auch betriebsbedingten Veränderungen unterliegen, was unter anderem folgende Ursache haben kann. Im Laufkorb setzt sich ein Filterkuchen bei fortschreitender Auftrennung des Fest-flüssig Gemisches ab, wobei nicht zu erwarten ist, dass sich der Filterkuchen immer über den Gesamtumfang des Laufkorbs gleichmässig verteilt. Der Massenmittelpunkt des Filterkuchens wird daher im allgemeinen nicht auf der Symmetrieachse des Laufkorbs, nämlich der Drehachse der Antriebswelle zu liegen kommen. Diese dynamische, das heisst, zeitlich veränderliche Kraft, die im allgemeinen mit zunehmendem Abscheidungsgrad ansteigt, wird ebenfalls über die Lager in das Wellenrohr eingeleitet, sodass die Antriebswelle diese Kraft nicht aufnehmen muss, wie in den folgenden, bevorzugten Ausführungsbeispielen bechrieben wird.

Für die Dichtungsanordnung nach einem bevorzugten Ausführungsbeispiel ist der Laufkorb in dem Lagerblock derart gelagert, dass eine durch dynamische Kräfte hervorgerufene Lagerkraft von der Antriebswelle im wesentlichen entkoppelt ist.

Für die Dichtungsanordnung ist nach einem bevorzugten Ausführungsbeispiel zumindest ein erstes Lager zur Aufnahme der durch die Drehbewegung des Laufkorbs entstehenden dynamischen Kräfte, sowie zumindest ein zweites Lager zur Führung der Antriebswelle vorgesehen.

Die Dichtungsanordnung umfasst nach einem bevorzugten Ausführungsbeispiel den Lagerblock und ein Wellenrohr, das koaxial um die Antriebswelle angeordnet ist. Zumindest eines der Lager ist zwischen dem Wellenrohr und der Laufkorbnabe angeordnet.

Für die Dichtungsanordnung ist nach einem bevorzugten Ausführungsbeispiel die Laufkorbnabe über die Aufhängung des Laufkorbes an einem ersten Ende der Antriebswelle drehfest befestigt. Zumindest das zweite Lager ist in der Nähe eines zweiten Endes auf der Antriebswelle oder dem Wellenrohr angeordnet, wobei das zweite Ende an eine Antriebseinheit koppelbar ist.

Für die Dichtungsanordnung ist nach einem bevorzugten Ausführungsbeispiel die Antriebswelle entlang der im wesentlichen vertikalen Drehachse angeordnet. Die Antriebswelle weist insbesondere einen Wellendurchmesser in einem Bereich von 10 bis 300 mm auf, der Wellendurchmesser liegt im speziellen zwischen 10 und 150 mm, bevorzugt in einem Bereich von 50 bis 150 mm und die Antriebswelle weist eine Länge von 400 bis 1500 mm auf, insbesondere 400 bis 1000 mm, im speziellen 500 bis 800 mm, bevorzugt 600 bis 700 mm, wobei der Durchmesser des Laufkorbs in einem Bereich von 300 bis 2500 mm liegt, insbesondere 300 bis 2000 mm beträgt, bevorzugt in einem Bereich von 400 bis 1600 mm liegt.

Durch die Anordnung der Lager werden Horizontalkräfte, sowie Unwuchtkräfte des Lagerkorbs vom Wellenrohr aufgenommen. Die Antriebswelle kann im wesentlichen für die Aufnahme von Torsionskräften ausgelegt werden, die beim Anfahren und Abfahren der Zentrifuge durch das Antriebsmittel eingeleitet werden, was zur Folge hat, dass bei ihrer Dimensionierung mit einem wesentlich geringerem Wellendurchmesser das Auslangen gefunden werden kann, sodass der Wellendurchmesser auf bis zu einem Drittel gegenüber des urspünglichen Wellendurchmessers reduziert werden kann.

Durch die Verringerung des Wellendurchmessers ergibt sich ein geringerer Durchmesser des Wellenrohrs, sowie geringere Umfangsgeschwindigkeiten, was einerseits zur Erhöhung der Lebensdauer der Lager beiträgt und andererseits die Umfangsgeschwindigkeiten zwischen abzudichtenden ruhenden und bewegten Laufflächen auf Wellenrohr, Antriebswelle und/oder Laufkorbnabe wesentlich verringert, sodass sich gänzlich neue Dichtungsanordnungen ergeben.

Die Laufkorbnabe wird auf dem Wellenrohr gelagert, was nicht zuletzt zu einer Verbesserung der Laufeigenschaften der Laufkorbnabe führt, denn die Laufkorbnabe kann über ihre Gesamtlänge am Wellenrohr abgestützt werden, wodurch die Führung der Laufkorbnabe gewährleistet ist. Durch die Lagerung der Laufkorbnabe im Wellenrohr ist die Laufkorbnabe entlang ihrer Gesamtlänge abgestützt. Diese Abstützung hat zur Folge, dass wesentlich engere Toleranzen zwischen Laufkorbnabe und Wellenrohr realisierbar sind, sodass die Abdichtung des Spalts zwischen der Laufkorbnabe und dem Wellenrohr überhaupt erst ermöglicht wird. Durch diese Abstützung kann die Laufruhe der Laufkorbnabe erhöht werden, da auf eine fliegende Lagerung der Laufkorbnabe verzichtet werden kann.

Die verringerten Aussendurchmesser haben auch eine Abnahme der Umfangsgeschwindigkeiten zur Folge, sodass sich die im Betriebszustand entstehende Reibungswärme reduziert wird, wodurch Lippendichtungen zur Abdichtung des Spaltes eingesetzt werden können.

Die Umdrehungen des Laufkorbs liegen im Bereich von 500 bis 3000 U/min. Insbesondere ist ein Bereich von 750 bis 1600 U/min bevorzugt, wobei normale Lagerschmierung für bis 900 U/min als ausreichend erachtet werden kann, ölgeschmierte Lager oberhalb 900 U/min eingesetzt werden können.

Für die Dichtungsanordnung nach einem bevorzugten Ausführungsbeispiel kann sich der Spalt zumindest vom ersten zu dem zweiten Lager erstrecken.

Nach einem bevorzugten Ausführungsbeispiel umfasst der Laufkorb zumindest eine Auslassöffnung zum Austrag des Filterkuchens, die sich in der Umgebung des Spalts befindet, wobei durch die Dichtung ein Eindringen von Stäuben und/oder Partikeln und/oderTröpfchen und/oder Gasen verhinderbar ist.

Für die Dichtungsanordnung ist nach einem bevorzugten Ausführungsbeispiel eine Lagerschmierung durch eine Bohrung im Wellenrohr durchführbar, welche mit einem Schmiermittelzufuhrmittel ausserhalb des Laufkorbes der Zentrifuge verbindbar ist.

Für die Dichtungsanordnung ist nach einem bevorzugten Ausführungsbeispiel eine Dichtung zwischen einer bewegten Lauffläche, die auf einer Mantelfläche der Laufkorbnabe und einer gegenüberliegend angeordneten ruhenden Lauffläche angeordnet, die auf der Mantelfläche des Wellenrohrs ausgebildet ist.

Für die Dichtungsanordnung nach einem bevorzugten Ausführungsbeispiel ist zumindest eine der Dichtungen als Wellendichtring und/oder als Lippendichtung und/oder als umlaufende Dichtung ausgebildet.

Für die Dichtungsanordnung nach einem bevorzugten Ausführungsbeispiel ist die Lippendichtung um eine äussere Mantelfläche der Laufkorbnabe herum angeordnet.

Für die Dichtungsanordnung nach einem bevorzugten Ausführungsbeispiel liegt die Umfangsgeschwindigkeit im Betriebszustand an der Berührungsfläche der Dichtung mit der bewegten Lauffläche bei Fettschmierung unterhalb von 100 m/s, insbesondere unterhalb von 75 m/s, im speziellen unterhalb von 50 m/s, bevorzugt unterhalb von 40 m/s und/oder beträgt bei Trockenlauf maximal 10 m/s, insbesondere maximal 5 m/s, besonders bevorzugt maximal 1 m/s.

Für die Dichtungsanordnung sind nach einem bevorzugten Ausführungsbeispiel Inertisierungsmittel zur Erzeugung und Aufrechterhaltung einer Inertgasatmosphäre in dem von den Dichtungen eingeschlossenen Raum innerhalb der Laufkorbnabe vorgesehen.

Insbesondere kann eine Vertikalzentrifuge mit einer Dichtungsanordnung nach einem der vorhergehenden Ausführungsbeispiele versehen sein. Eine vertikal gelagerte Zentrifuge eignet sich insbesondere für kleine bis mittlere Chargen mit häufig wechselnder Produktspezifikation, während eine horizontal gelagerte, filtrierende Schälzentrifuge für hohe Durchsätze konstant anfallender Suspensionen im Dauerbetrieb bevorzugt eingesetzt wird. Das Einsatzgebiet filtrierender Zentrifugen überstreicht dabei einen weiten Partikelgrössenbereich von 0,1 bis 10000 µm, insbsesondere 1 bis 5000 µm, bevorzugt 1 bis 1000 µm. Die zu zentrifugierenden Suspensionen weisen insbesondere einen Feststoffgehalt von über 10% auf, bevorzugt über 20%, im speziellen über 25% auf.

Derartige Abdichtungsprobleme treten bei Vertikalzentrifungen sowohl bei Obenentleerung als auch bei Untenentleerung auf, da Filterkuchenmaterial immer in den Spalt zwischen Lagerkorbnabe und Wellenrohr der Antriebswelle gelangen kann, weil es sich um kleine, leichte Teilchen, wie feine Stäube oder Emulsionen oder dergleichen handelt.

Die Erfindung wird an Hand der Zeichnung näher erläutert. Es zeigen:
- Fig. 1: eine Dichtungsanordnung für eine Zentrifuge nach dem Stand der Technik
- Fig. 2: einen Schnitt durch eine Dichtungsanordnung für eine Zentrifuge gemäss der Erfindung
- Fig. 3: ein Detail der Dichtungsanordnung gemäss Fig. 2
- Fig. 4: eine Gesamtansicht einer Vertikalzentrifuge gemäss der Erfindung mit Antriebseinheit.

Im voraus soll festgelegt werden, dass Bezugszeichen grösser 100 zu Ausführungsbeispielen gehören, die bereits im Stand der Technik offenbart sind.

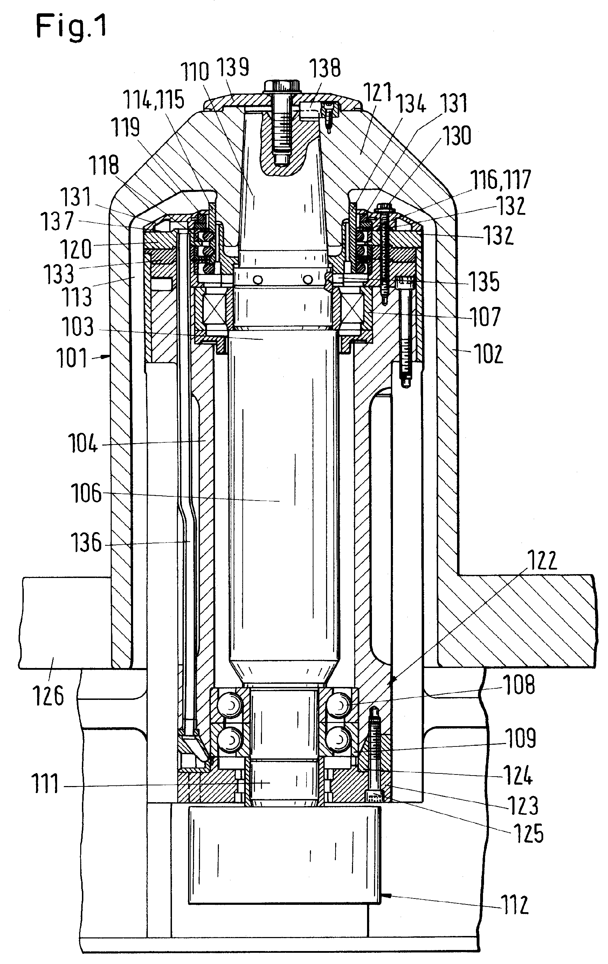

Bei dem in Fig. 1 gezeigten bevorzugten Ausführungsbeispiel nach dem Stand der Technik umfasst die Dichtungsanordnung einen Laufkorb 101, welcher über eine Aufhängung 121 drehfest mit einer Antriebswelle 103 verbunden ist. Die Aufhängung 121 befindet sich an einem ersten Ende 110 der Antriebswelle, welches in diesem Ausführungsbeispiel konische Form aufweist. Die konische Form wurde gewählt, um möglichst geringe Verschwächungen der Antriebswelle 103 durch Kerbwirkung zu erreichen. Als Verschwächung wird dabei jeder umittelbare Durchmesserübergang der Antriebswelle 103 bezeichnet, der unter der Einwirkung eine Belastung zu lokalen Belastungsspitzen führt, wobei diese Belastungsspitzen der Wirkung einer Kerbe entsprechen. Die Antriebswelle muss nicht nur die gesamte Last des Laufkorbs 101 sowie die Torsionskräfte aufnehmen, sondern auch die dynamischen Kräfte, die durch die Drehbewegung des Laufkorbs und/oder der Antriebswelle 103 selbst entstehen. Durch diese dynamischen Kräfte wird eine periodisch schwankende Biegewechselspannung in die Welle eingeleitet, die zu Dauerbrüchen führen kann, wobei bekannt ist, dass derartige Dauerbrüche oft von konstruktiven Kerben, wie beispielsweise Wellenabsätzen mit kleinen Übergangsradien ihren Ausgang nehmen. Die Aufhängung 121 ist mittels eines Sicherungselements 138 gegen Verdrehung gesichert. Das Sicherungselement 138 wird mittels eines Deckels 139 positioniert. Die Antriebswelle ist mittels einer nicht näher dargestellten Antriebseinheit 112 um ihre Drehachse 106 drehbar. Eine Rotation der Antriebswelle 103 ist somit über die Aufhängung 121 des Laufkorbs 101 auf eine Laufkorbnabe 102 und/oder über eine Rippenstruktur 126 auf den Mantel des Laufkorbs übertragbar. Der Laufkorb 121 ist demnach als rotationssymmetrisches Bauteil aufgeführt, dessen Rotationsachse mit der Drehachse 106 der Antriebswelle übereinstimmt. Die Antriebswelle 103 ist in einem Lagerblock 122 gelagert, welcher neben den Lagern (107, 108, 109) ein Wellenrohr 104 umfasst. Der Lagerblock 122 umfasst des weiteren eine Dichtung 118, wobei im dargestellten Ausführungsbeispiel drei Wellendichtringe hintereinander angeordnet sind. Die Dichtung 118 wird in einem Aufnahmemittel 120 aufgenommen, welches über eine Schraubverbindung 130 auf dem Wellenrohr befestigt ist. Das Aufnahmemittel 120 ist als eine Serie von Flanschen ausgestaltet, welche je einen Wellendichtring aufnehmen, sodass bei der Montage die Flansche lückenlos übereinander gestapelt werden können und mittels eines Abschlusselements 131 und/oder Hülsenelementen gegen Verunreinigungen, die sich im Spalt 113 befinden können, abdichtbar sind. Die Dichtwirkung umfasst auch eine Abdichtung gegenüber dem Austritt von Schmiermittel, welches zur Schmierung der Lager verwendet wird, in den Spalt 113. Abdichtelemente 132, wie O-Ringe, können zwischen den Flanschen und/oder zwischen Flanschen und Abschlusselement 131 oder Hülsenelement 133 vorgesehen sein. Ein mit der Antriebswelle 103 drehfest verbundenes Anschlusselement 134 ist mit einer Lauffläche ausgestattet, die in ihrer Oberflächengüte derart ausgestaltet ist, dass die als Wellendichtring ausgestaltete Dichtung 118 auf dieser Oberfläche gleiten kann, ohne sich durch Reibungswärme unzulässig zu erwärmen. Es ist vorteilhaft, die Lauffläche auf dem Anschlusselement 134 anzuordnen, da die Herstellung der Lauffläche auf diesem Anschlusselement 134 wesentlich einfacher und kostengünstiger als auf der Antriebswelle selbst erfolgen kann. Allerdings müssen Positioniermittel 135 für das Anschlusselement 134 vorgesehen werden, die eine Fixierung des Anschlusselements 134 auf der Antriebswelle ermöglichen. An die Form- und Lagetoleranzen dieses Anschlusselements werden hohe Anforderungen gestellt, da zum einen gewährleistst sein muss, dass kein Mittenversatz zwischen der Antriebswelle und dem Anschlusselement 134 auftritt, sodass die Dichtwirkung der Dichtung gewährleistet ist und an keiner Stelle unzulässige Pressdrücke auf die Dichtung einwirken, die zu einer verringerten Dichtwirkung und/oder einer Überhitzung der Dichtung führen können. Zum anderen muss die Massenverteilung des Anschlusselements 134 derart ausgestaltet sein, dass der Massenmittelpunkt auf der Drehachse der Antriebswelle 106 liegt, sodass keine dynamischen Kräfte, insbesondere Unwuchtkräfte in die Welle eingeleitet werden. Die erforderliche Präzision in der Fertigung führt zu einer Verteuerung des gesamten Lagerblocks.

Zusätzlich ist es erforderlich, eine Reinigungsmöglichkeit vorzusehen, um den Spalt 113 periodisch von Verunreinigungen zu säubern oder mittels eines kontinuierlich einsetzbaren Spülverfahrens zu verhindern, dass Verunreinigungen in den Spalt 113 gelangen. Im dargestellten Ausführungsbeispiel ist eine als Rohr 136 ausgestaltete Zuleitung für ein Reinigungsmittel gezeigt, durch welche ein Reinigungsmittel in eine umlaufende Bohrung 137 eingeleitet wird, welche im Lagerblock 122 zwischen dem Aufnahmemittel 120 und dem Abschlusselement 131 angeordnet ist. Zusätzliche Abdichtelemente 132 sind erforderlich, um die umlaufende Bohrung 137 derart abzudichten, dass das Eindringen von Reinigungsmittel in die Lagerbereiche vermieden wird. Im Abschlusselement 131 sind nicht dargestellte Düsen angeordnet, sodass Reinigungsmittel in den Spalt 113 austreten kann.

Anstatt einer periodischen Reinigung kann auch vorgesehen werden, über das beschriebene Rohr 136 sowie die umlaufende Bohrung 137 mittels Düsen ein Inertgas in den Spalt 113 kontinuierlich einzuleiten. Der Spalt wird kontinuierlich mit Inertgas gespült, sodass Verunreinigungen mit dem Spülstrom aus dem Spalt 113 ausgetragen werden. Diese Variante kommt zum Einsatz, wenn reaktive Medien einer Zentrifugierung unterworfen werden, sodass die Gefahr von unerwünschten chemischen Reaktionen oder sogar Explosionen besteht.

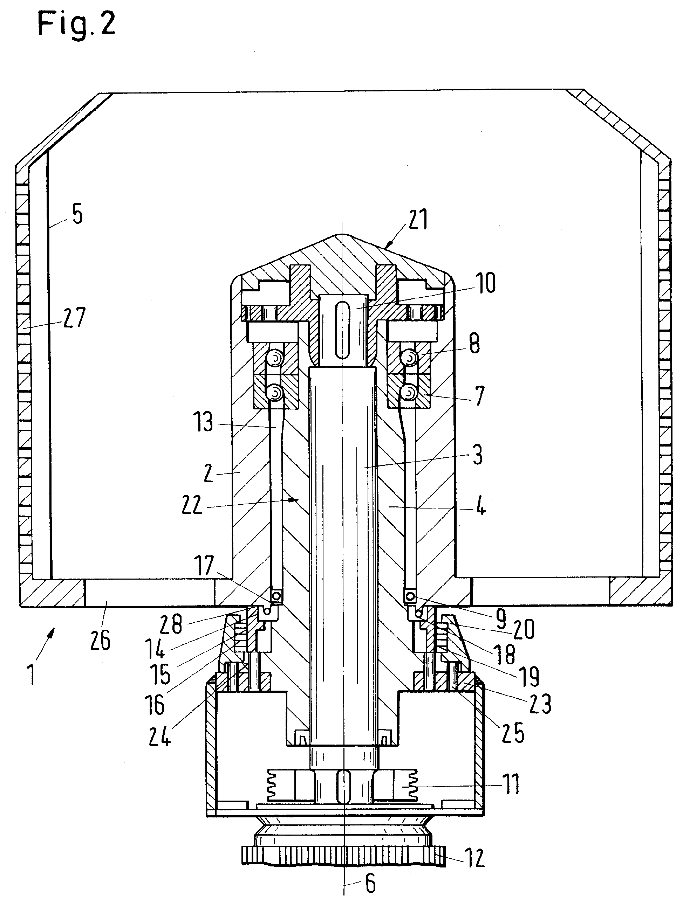

Das in Fig. 2 dargestellte Ausführungsbeispiel der erfindungsgemässen Dichtungsanordnung besteht aus einem um eine Drehachse 6 drehbar angeordneten Laufkorb 1 einer Zentrifuge, insbesondere einer Vertikalzentrifuge mit Untenentleerung, wobei der Laufkorb 1 über eine Laufkorbnabe 2 mit einer sich entlang der Drehachse 6 in einem Lagerblock (4,7,8,9,20,24) erstreckenden an eine Antriebseinheit 12 angekoppelten Antriebswelle 3 über eine Aufhängung 21 des Laufkorbs 1 drehfest verbunden ist. Antriebsseitig ist zwischen der Laufkorbnabe 2 und dem Lagerblock (4,7,8,9,20,24) eine Dichtung (18, 19) zur Abdichtung eines Spalts 13 zwischen Lagerblock (4,7,8,9,20,24) und Laufkorbnabe 2 vorgesehen.

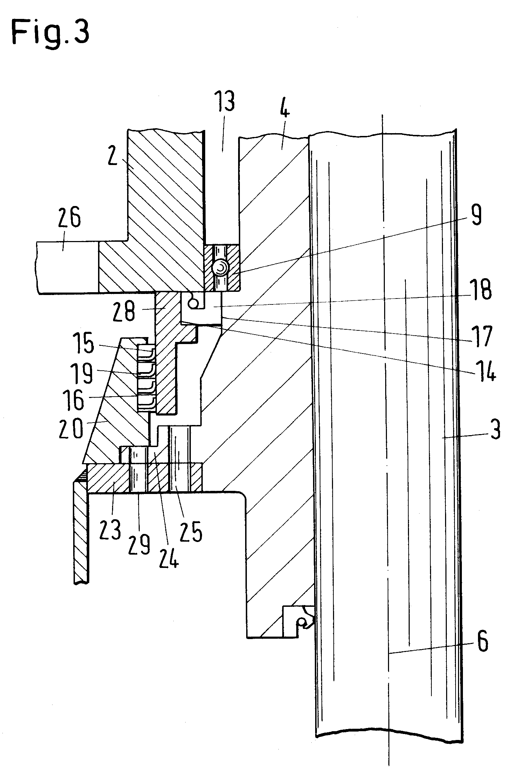

Bei dem in Fig. 2 und Fig. 3 gezeigten bevorzugten Ausführungsbeispiel umfasst die Dichtungsanordnung einen Laufkorb 1, welcher über eine Aufhängung 21 drehfest mit einer Antriebswelle 3 verbunden ist. Die Aufhängung 21 befindet sich an einem ersten Ende 10 der Antriebswelle, welches in diesem Ausführungsbeispiel einen zylindrischen Absatz aufweist. Die Aufhängung ist mittels einer Passfeder drehfest mit dem ersten Ende 10 der Antriebswelle 3 verbunden. Die Passfederverbindung wird bevorzugt gewählt, da sie einen geringen Aufwand in der Fertigung erfordert und infolgedessen kostengünstiger zu fertigen ist. Aufgrund der vorstehend beschriebenen Entkopplung von dynamischen und/oder quasistatischen Kräften des Laufkorbs von den durch die Antriebseinheit in die Antriebswelle eingeleiteten Torsionskräften, ist die Antriebswelle allenfalls noch Biegewechselspannungen ausgesetzt, die gegenüber den Torsionskräften nicht ins Gewicht fallen, sodass eine unzulässige Beanspruchung der konstruktiven Kerben auszuschliessen ist, Somit eröffnen sich bei der Auslegung der Antriebswelle kostengünstige konstruktive Alternativen, die aufgrund der kombinierten Beanspruchung der Antriebswelle, wie sie aus dem Stand der Technik bekannt ist, nicht zur Verfügung gestanden haben. Alternativ dazu kann vorgesehen werden, dass der Sitz der Aufhängung 21 des Lagerkorbs 1 konische Form aufweist, wie es im Ausführungsbeispiel nach dem Stand der Technik offenbart worden ist. Die konische Form wird gewählt, um möglichst geringe Verschwächungen der Antriebswelle 3 durch Kerbwirkung zu erreichen. Die Antriebswelle muss zwar die gesamte Last des Laufkorbs 1 sowie die Torsionskräfte aufnehmen, sowie auch etwaige dynamischen Kräfte, die durch die Drehbewegung der Antriebswelle 3 selbst entstehen, wenn der Massenmittelpunkt der Antriebswelle nicht auf der Drehachse liegt. Durch diese dynamischen Kräfte wird eine periodisch schwankende Biegewechselspannung in die Antriebswelle eingeleitet, die zu Dauerbrüchen führen kann, wobei bekannt ist, dass derartige Dauerbrüche oft von derartigen konstruktiven Kerben ihren Ausgang nehmen. Somit ist eine Variante mit einem konischen Antriebswellenteil zur Aufnahme der Aufhängung 21 des Laufkorbs insbesondere für grosse Zentrifungen geeignet, bei denen die Gewichtskräfte der Antriebswelle 3 nicht gegenüber den Torsionskräften vernachlässigt werden können. Die Aufhängung 21 ist mittels eines Sicherungselements analog zu dem in Fig. 1 dargestellten Ausführungsbeispiel gegen Verdrehung gesichert. Sicherungselement und Aufhängung 21 des Laufkorbs 1 werden mittels eines Deckels positioniert.

Die Antriebswelle ist mittels einer nicht näher dargestellten Antriebseinheit 12 um ihre Drehachse 6 drehbar. Als Antriebseinheit 12 ist insbesondere ein Elektromotor vorgesehen, der direkt an die Antriebswelle angeflanscht werden kann oder alternativ dazu mittels einer Übertragungsvorrichtung, insbesondere eines Riementriebs 11 an die Antriebswelle 6 koppelbar ist. Eine Rotation der Antriebswelle 3 ist somit über die Aufhängung 21 des Laufkorbs 1 auf eine Laufkorbnabe 2, die über eine Rippenstruktur 26 auf den Mantel 27 des Laufkorbs 1 übertragbar. Der Laufkorb 21 ist demnach als rotationssymmetrisches Bauteil aufgeführt, dessen Rotationsachse mit der Drehachse 6 der Antriebswelle im wesentlichen übereinstimmt. Die Antriebswelle 3 ist in einem Lagerblock 22 gelagert, welcher neben den Lagern (7, 8, 9) ein Wellenrohr 4 umfasst.

Die Anordnung der Lager (7, 8, 9) unterscheidet sich deutlich vom Stand der Technik, denn die Dichtungsanordnung gemäss Fig. 2 oder Fig. 3 für einen um eine Drehachse 6 drehbar angeordneten Laufkorb 1 einer Zentrifuge ist derart ausgestaltet, dass der Laufkorb 1 über eine Laufkorbnabe 2 mit einer sich entlang der Drehachse 6 in einem Lagerblock (4,7,8,9,20,24) erstreckenden, an eine Antriebseinheit 12 angekoppelten Antriebswelle 3 über die Aufhängung 21 des Laufkorbs 1 drehfest verbunden ist, dass der Laufkorb 1 in dem Lagerblock (4,7,8,9,20,24) derart gelagert ist, dass eine durch dynamische Kräfte hervorgerufene Lagerkraft von der Antriebswelle 3 im wesentlichen entkoppelt ist. In dem vorliegenden Ausführungsbeispiel sind somit die beiden Lager (7,8) zwischen Wellenrohr 4 und Laufkorbnabe 2 angeordnet. Die Lager (7,8) sind dabei möglichst in der Nähe des ersten Endes 10 der Antriebswelle 3 angebracht, sodass grösstmögliche Laufruhe des drehenden Lagerkorbs 1 gewährleistet ist. Über die Lager (7,8) werden die dynamischen Kräfte, die aus der Bewegung des Laufkorbs resultieren in das Wellenrohr 4 eingeleitet. Unter diesen dynamischen Kräften sollen insbesondere Unwuchtkräfte verstanden werden. Diese Unwuchtkräfte sind während des Anfahrens der Zentrifuge, sowie während der Abschaltphase zeitlich veränderlich. Während des stationären Betriebs der Zentrifuge kann die Unwuchtkraft bedingt durch eine nicht rotationssymmetrische Massenverteilung des Laufkorbs 1 periodischen Schwankungen unterliegen und sich durch Nachladen der Zentrifuge ändern. Die Periodendauer entspricht einer Umdrehung der Antriebswelle. Zu diesen periodisch schwankenden Unwuchtkräften können bedingt durch die ungleichmässige Verteilung des Trennguts auf dem Mantel 27 des Laufkorbs 1 und/oder durch ungleichmässigen Flüssigkeitsaustrag durch die Öffnungen im Mantel 27 des Laufkorbs auch zeitlich veränderliche Unwuchtkräfte auf die Lager wirken. Alle diese Kräfte werden jetzt aber nicht mehr von der Antriebswelle 3 aufgenommen. Daraus ergibt sich der Vorteil, dass eine Antriebswelle 3 mit einem wesentlich kleineren Aussendurchmesser verwendbar ist, als es bei einer Zentrifuge gleicher Bauart und gleicher Grösse im Stand der Technik möglich war.

Das Lager 9 ist im wesentlichen ein Führungslager und dient der Einleitung von Radialkräften, die durch die Bewegung der Laufkorbnabe 2 hervorgerufen werden, in das Wellenrohr 4. Auch das Lager 9 ist vorteilhafterweise zwischen Laufkorbnabe 2 und Wellenrohr 4 angeordnet.

Der Lagerblock 22 umfasst des weiteren eine Dichtung 18, wobei im dargestellten Ausführungsbeispiel ein Wellendichtring möglichst in der Nähe der Eintrittsöffnung in den Spalt 13 derart angeordnet ist, dass das Lager 9 gegen Verunreinigungen abdichtbar ist, die durch die Eintrittsöffnung in den Spalt 13 gelangen. Die Dichtung 18 ist zwischen einer ruhenden Lauffläche 17 angeordnet, die Teil des Wellenrohrs 4 ist, und einer bewegten Lauffläche 14, die als Teil der Laufkorbnabe 2 oder als ein mit der Laufkorbnabe 2 drehfest verbundenes Hülsenelement 28 ausgebildet ist. Der stromaufwärts liegende Teil des Spalts 13, der für Teilchen aus dem Filterkuchen 5 noch frei zugänglich ist, kann duch eine weitere Dichtung, die als Lippendichtung 19 ausgeführt ist, abgedichtet werden, sodass es für den aus dem Laufkorb auszutragenden Filterkuchen so aussieht, als wäre überhaupt kein Spalt vorhanden. Die Lippendichtung 19 wird in einem Aufnahmemittel 20 aufgenommen, welches über eine Schraubverbindung 29 auf dem Wellenrohr befestigt ist. Das Aufnahmemittel 20 ist insbesondere als Teil eines Rohres oder Teil einer Hülse ausgestaltet, in welcher Ausnehmungen zur Aufnahme zumindest einer Lippendichtung 19 vorgesehen sind. Die Ausnehmung dient als Halterung für die Lippendichtung 19, wobei die Grundfläche der Ausnehmung eine ruhende Lauffläche 16 ausbildet, auf welcher eine Lippe der Lippendichtung 19 aufliegt. Die Montage des Aufnahmemittels 20 erfolgt derart, dass dass Aufnahmemittel mittels einer Schraubverbindung an das Wellenrohr 4 direkt oder über eine Flanschverbindung 23 an das Wellenrohr 4 angebracht ist. Durch die beiden Dichtungen (18, 19) wird der Spalt 13 gegen Verunreinigungen abgedichtet. Vorteilhafterweise ist die Dichtung 19 an der Aussenseite eines Hülsenelements 28 ausgebildet, welches drehfest mit der Laufkorbnabe 2 verbunden ist. Zwischen Dichtung 19 und dem Hülsenelement 28 erstreckt sich eine bewegte Lauffläche 15, sodass die Dichtung 19 auf dieser bewegten Lauffläche 15 gleiten kann. Der Vorteil der Anordnung der Dichtungen 18 und 19 auf gegenüberliegenden Seiten des Hülsenelements 28 liegt darin begründet, dass zwischen den beiden Dichtungen sich ein labyrinthartiger Kanal ausbildet. Allfällige, die Lippendichtung passierende, einzelne Schmutzpartikel können somit schon in dem labyrinthartigen Kanal abgefangen werden, sodass sie die Dichtung 18 nicht einmal erreichen. Somit kommt dem labyrinthartigen Kanal ebenfalls eine gewisse Dichtwirkung zu. Ein Hülsenelement (28) wird vorgesehen, weil es eine einfache Fertigung der bewegten Laufflächen (14,15) erlaubt. Insbesondere bei kleinen Zentrifuge kann zumindest die Dichtung 18 auch direkt zwischen Wellenrohr 4 und Laufkorbnabe 2 vorgesehen sein, weil bei den kleineren Umfangsgeschwindigkeiten die entstehende Reibungswärme zu gering ist, um eine unzulässige Erwärmung der Dichtung zu bewirken, sodass auch an die Oberflächengüte der bewegten Lauffläche (14, 15) nicht so hohe Anforderungen zu stellen sind.

Eine aufwändige Konstruktion umfassend Abdichtelemente 132 (siehe Fig. 1), zwischen den Flanschen und/oder zwischen Flanschen und Abschlusselement 131 oder Hülsenelement 133, wie sie im Stand der Technik beschrieben ist, wird somit obsolet. Auch das mit der Antriebswelle 103 drehfest verbundene Anschlusselement 134, das mit einer bewegten Lauffläche ausgestattet war, die ebenfalls eine hohe Oberflächengüte erforderte, dass die als Wellendichtring ausgestaltete Dichtung 118 auf dieser Oberfläche gleiten kann, ohne sich durch Reibungswärme unzulässig zu erwärmen, ist nicht mehr erforderlich, da die Dichtungen (18,19) am Spalteintritt angeordnet werden können.

Gemäss dem Ausführungsbeispiel nach Fig. 2 oder Fig. 3 ist es nicht mehr erforderlich, eine Reinigungsmöglichkeit vorzusehen, um den Spalt 13 periodisch von Verunreinigungen zu säubern oder mittels eines kontinuierlich einsetzbaren Spülverfahrens zu verhindern, dass Verunreinigungen in den Spalt 13 gelangen. Durch die Kraftentkoppelung und die sich dementsprechend ergebende Verringerung des Durchmessers der Antriebswelle 3 sowie des Wellenrohrs 4, können die Dichtungen am Spalteintritt angeordnet werden, sodass Teilchen des auszutragenden Filterkuchens keinen Spalt 13 mehr "sehen" können und somit die Gefahr jedwelcher Kontamination der Dichtungsanordnung ausgeschlossen werden kann.

Hinfällig wird auch die Variante, durch das in Fig. 1 beschriebene Rohr 136 sowie die umlaufende Bohrung 137 mittels Düsen ein Inertgas in den Spalt 113 kontinuierlich einzuleiten, um den Spalt kontinuierlich mit Inertgas zu spülen, sodass Verunreinigungen mit dem Spülstrom aus dem Spalt 113 ausgetragen werden, da während des Betriebs und im zusammengebauten Zustand keine Verunreinigungen in den Spalt 13 gelangen können. Somit ist die Zentrifuge gemäss der Erfindung zum Einsatz für reaktive und/oder explosive Medien ohne die vorhin genannte, aufwändige Spülung möglich, weil die Gefahr von unerwünschten chemischen Reaktionen oder sogar Explosionen bedingt durch die Abdichtung des Bereichs der Dichtungsanordnung nicht mehr besteht, solange die Funktion der Dichtungen gewährleistet ist. Die Dichtungen sind relativ einfach einer Inspektion zugänglich, sodass sich auch die Wartung der Zentrifuge vereinfacht.

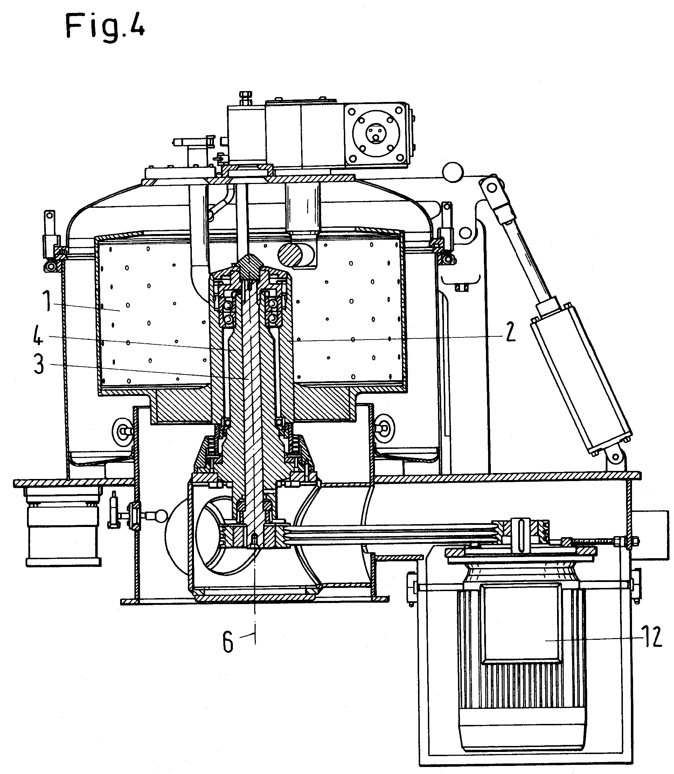

Fig. 4 zeigt eine Gesamtansicht einer Dichtungsanordnung einer Vertikalzentrifuge. Der Lagerkorb 1 ist in diesem Fall in unbeladenem Zustand dargestellt. Über die Oberfläche des Lagerkorbs sind Austrittsöffnungen für eine Flüssigkeit dargestellt, welche den Laufkorb durch das Zentrifugieren durch die Austrittsöffnungen verlässt und im Gehäuse, welches um den Laufkorb 1 herum angeordnet ist, aufgefangen werden kann. Der Laufkorb 1 umfasst die Laufkorbnabe 2, welche mittels der erfindungsgemässen Dichtungsanordnung auf dem Wellenrohr 4 gelagert ist. Die Antriebswelle 3 ist drehfest mit dem Laufkorb 1 verbunden und wird über einen Keilriementrieb von einem als Antriebseinheit dienenden Elektromotor angetrieben. Auf den Keilriementrieb kann in einer nicht dargestellten Variante verzichtet werden. Der Antriebsmotor ist in diesem Fall direkt mit der Antriebswelle 3 mittels einer Flanschverbindung verbunden.

### Bezugszeichenliste

- 1.: Laufkorb
- 2.: Laufkorbnabe
- 3.: Antriebswelle
- 4.: Wellenrohr
- 5.: Filterkuchen
- 6.: Drehachse
- 7.: Lager
- 8.: Lager
- 9.: Lager
- 10.: erstes Ende der Antriebswelle
- 11.: zweites Ende der Antriebswelle
- 12.: Antriebseinheit
- 13.: Spalt
- 14.: bewegte Lauffläche
- 15.: bewegte Lauffläche
- 16.: ruhende Lauffläche
- 17.: ruhende Lauffläche
- 18.: Wellendichtring
- 19.: Lippendichtung
- 20.: Aufnahmemittel
- 21.: Aufhängung
- 22.: Lagerblock
- 23.: Flanschverbindung
- 24.: Flansch
- 25.: Verbindungsmittel
- 26.: Rippenstruktur
- 27.: Mantel
- 28.: Hülsenelement
- 29.: Schraubverbindung

### Bezugszeichenliste für den Stand der Technik (Fig. 1)

- 101.: Laufkorb
- 102.: Laufkorbnabe
- 103.: Antriebswelle
- 104.: Wellenrohr
- 105.: Filterkuchen
- 106.: Drehachse
- 107.: Lager
- 108.: Lager
- 109.: Lager
- 110.: erstes Ende der Antriebswelle
- 111.: zweites Ende der Antriebswelle
- 112.: Antriebseinheit
- 113.: Spalt
- 114.: bewegte Lauffläche
- 115.: bewegte Lauffläche
- 116.: ruhende Lauffläche
- 117.: ruhende Lauffläche
- 118.: Wellendichtring
- 119.: Lippendichtung
- 120.: Aufnahmemittel
- 121.: Aufhängung
- 122.: Lagerblock
- 123.: Flanschverbindung
- 124.: Flansch
- 125.: Verbindungsmittel
- 126.: Rippenstruktur
- 127.: Mantel
- 130.: Schraubverbindung
- 131.: Abschlusselement
- 132.: Abdichtelement
- 133.: Hülsenelement
- 134.: Anschlusselement
- 135.: Positioniermittel für Anschlusselement
- 136.: Kanal
- 137.: umlaufende Bohrung
- 138.: Sicherungselement
- 139.: Deckel

## Patentansprüche

1. Dichtungsanordnung umfassend einen um eine Drehachse (6) drehbar angeordneten Laufkorb (1) einer Zentrifuge, wobei der Laufkorb (1) über eine Laufkorbnabe (2) mit einer sich entlang der Drehachse (6) in einem Lagerblock (4,7,8,9,20,24) erstreckenden, an eine Antriebseinheit (12) angekoppelten Antriebswelle (3) über eine Aufhängung (21) des Laufkorbs (1) drehfest verbunden ist, wobei ein Spalt (13) zwischen Lagerblock (4,7,8,9,20,24) und Laufkorbnabe (2) vorgesehen ist, **dadurch gekennzeichnet, dass** antriebsseitig zwischen der Laufkorbnabe (2) und dem Lagerblock (4,7,8,9,20,24) eine Dichtung (18, 19) zur Abdichtung des Spalts (13) vorgesehen ist.

2. Dichtungsanordnung nach Anspruch 1, wobei der Laufkorb (1) in dem Lagerblock (4,7,8,9,20,24) derart gelagert ist, dass eine durch dynamische Kräfte hervorgerufene Lagerkraft von der Antriebswelle (3) im wesentlichen entkoppelt ist.

3. Dichtungsanordnung nach einem der vorhergehenden Ansprüche, wobei zumindest ein erstes Lager (7,8) zur Aufnahme der durch die Drehbewegung des Laufkorbs entstehenden dynamischen Kräfte, sowie zumindest ein zweites Lager (9) zur Führung der Antriebswelle (3) vorgesehen ist.

4. Dichtungsanordnung nach Anspruch 3, wobei der Lagerblock (4,7,8,9,20,24) ein Wellenrohr (4) umfasst, das koaxial um die Antriebswelle (3) angeordnet ist und zumindest eines der Lager (7,8,9) zwischen dem Wellenrohr (4) und der Laufkorbnabe (2) angeordnet ist.

5. Dichtungsanordnung nach einem der vorhergehenden Ansprüche 3 oder 4, wobei die Laufkorbnabe (2) über die Aufhängung (21) des Laufkorbs (1) an einem ersten Ende (10) der Antriebswelle drehfest befestigt ist, und zumindest das zweite Lager (9) in der Nähe eines zweiten Endes (11) auf der Antriebswelle oder dem Wellenrohr (4) angeordnet ist, wobei das zweite Ende (11) an eine Antriebseinheit (12) koppelbar ist.

6. Dichtungsanordnung nach einem der vorhergehenden Ansprüche, wobei die Antriebswelle (3) entlang der im wesentlichen vertikalen Drehachse (6) angeordnet ist, die Antriebswelle insbesondere einen Wellendurchmesser in einem Bereich von 10 bis 300 mm aufweist, der Wellendurchmesser im speziellen zwischen 10 und 150 mm liegt, bevorzugt in einem Bereich von 50 bis 150 mm aufweist und die Antriebswelle eine Länge von 400 bis 1500 mm aufweist, insbesondere 400 bis 1000 mm aufweist, im speziellen 500 bis 800 mm aufweist, bevorzugt 600 bis 700 mm aufweist, wobei der Durchmesser des Laufkorbs in einem Bereich von 300 bis 2500 mm liegt, insbesondere 300 bis 2000 mm beträgt, bevorzugt in einem Bereich von 400 bis 1600 mm liegt.

7. Dichtungsanordnung nach einem der vorhergehenden Ansprüche 3 bis 5, wobei sich der Spalt (13) zumindest vom ersten (7,8) zu dem zweiten Lager (9) erstreckt.

8. Dichtungsanordnung nach einem der vorhergehenden Ansprüche, wobei der Laufkorb (1) zumindest eine Auslassöffnung zum Austrag des Filterkuchens umfasst, die sich in der Umgebung des Spalts (13) befindet, wobei durch die Dichtung (18,19) ein Eindringen von Stäuben und/oder Partikeln und/oder Tröpfchen und/oder Gasen verhinderbar ist.

9. Dichtungsanordnung nach einem der vorhergehenden Ansprüche 4 bis 8 wobei eine Lagerschmierung durch eine Bohrung im Wellenrohr (4) durchführbar ist, welche mit einem Schmiermittelzufuhrmittel ausserhalb des Laufkorbes (1) der Zentrifuge verbindbar ist.

10. Dichtungsanordnung nach einem der vorhergehenden Ansprüche 4 bis 9, wobei die Dichtung (18,19) zwischen einer bewegten Lauffläche, die auf einer Mantelfläche der Laufkorbnabe (2) und einer gegenüberliegend angeordneten ruhenden Lauffläche (16, 17), dieauf der Mantelfläche des Wellenrohrs (4) ausgebildet ist, angeordnet ist.

11. Dichtungsanordnung nach einem der vorhergehenden Ansprüche, wobei eine Mehrzahl von Dichtungen vorgesehen ist, wobei zumindest eine der Dichtungen (18,19) als Wellendichtring und/oder als Lippendichtung und/oder als umlaufende Dichtung ausgebildet ist.

12. Dichtungsanordnung nach Anspruch 11, wobei die Lippendichtung um eine äussere Mantelfläche der Laufkorbnabe (2) herum angeordnet ist.

13. Dichtungsanordnung nach einem der vorhergehenden Ansprüche 10 bis 12, wobei die Umfangsgeschwindigkeit im Betriebszustand an der Berührungsfläche der Dichtung mit der bewegten Lauffläche bei Fettschmierung unterhalb von 100 m/s insbesondere unterhalb von 75 m/s, im speziellen unterhalb von 50 m/s, bevorzugt unterhalb von 40 m/s liegt und/oder bei Trockenlauf maximal 10 m/s, insbesondere maximal 5 m/s bevorzugt maximal 1 m/s beträgt.

14. Dichtungsanordnung nach einem der vorhergehenden Ansprüche, wobei Inertisierungsmittel zur Erzeugung und Aufrechterhaltung einer Inertgasatmosphäre in dem von den Dichtungen (18, 19) eingeschlossenen Raum innerhalb der Laufkorbnabe (2) vorgesehen sind.

15. Vertikalzentrifuge mit einer Dichtungsanordnung nach einem der vorhergehenden Ansprüche.

## Claims

1. A seal arrangement comprising a basket (1) of a centrifuge, said basket (1) being rotatably arranged around an axis of rotation (6) and rotationally fixedly connected, via a basket hub (2) and via a suspension (21) of the basket (1), to a drive shaft (3) coupled to a drive unit (12) extending along the axis of rotation (6) in a bearing block (4, 7, 8, 9, 20, 24), wherein a gap (13) is provided between the bearing block (4, 7, 8, 9, 20, 24) and the basket hub (2) **characterised in that** a seal (18, 19) is provided at the drive side between the basket hub (2) and the bearing block (4, 7, 8, 9, 20, 24) for the sealing of he gap (13).

2. A seal arrangement in accordance with claim 1, wherein the basket (1) is supported in the bearing block (4, 7, 8, 9, 20, 24) such that a bearing force caused by dynamic forces is substantially decoupled from the drive shaft (3).

3. A seal arrangement in accordance with any one of the preceding claims, wherein at least one first bearing (7, 8) is provided for the reception of the dynamic forces arising by the rotary movement of the basket and at least one second bearing (9) is provided for the guidance of the drive shaft (3).

4. A seal arrangement in accordance with claim 3, wherein the bearing block (4, 7, 8, 9, 20, 24) includes a flute tube (4) which is coaxially arranged around the drive shaft (3), and wherein at least one of the bearings (7, 8, 9) is arranged between the flute tube (4) and the basket hub (2).

5. A seal arrangement in accordance with any one of the preceding claims 3 oder 4, wherein the basket hub (2) is rotationally fixedly fastened to a first end (10) of the drive shaft via the suspension (21) of the basket (1) and at least the second bearing (9) is arranged in the vicinity of a second end (11) on the drive shaft or the flute tube (4), with the second end (11) being able to be coupled to a drive unit (12).

6. A seal arrangement in accordance with any one of the preceding claims, wherein the drive shaft (3) is arranged along the substantially vertical axis of rotation (6), the drive shaft in particular has a shaft diameter in a range from 10 to 300 mm, the shaft diameter specifically lies between 10 and 150 mm, preferably in a range from 50 to 150 mm, and the drive shaft has a length from 400 to 1,500 mm, in particular 400 to 1,000 mm, specifically 500 to 800 mm, preferably 600 to 700 mm, with the diameter of the basket lying in a range from 300 to 2,500 mm, in particular amounting to 300 to 2,000 mm, preferably lying in a range from 400 to 1,600 mm.

7. A seal arrangement in accordance with any one of the preceding claims 3 to 5, wherein the gap (13) extends at least from the first bearing (7, 8) to the second bearing (9).

8. A seal arrangement in accordance with any one of the preceding claims, wherein the basket (1) includes at least one discharge opening for the conveying out of the filter cake which is located in the vicinity of the gap (13), with a penetration of dust and/or particles and/or droplets and/or gases being able to be prevented by the seal (18, 19).

9. A seal arrangement in accordance with any one of the preceding claims 4 to 8, wherein a bearing lubrication can be carried out through a bore in the flute tube (4) which can be connected to a lubricant supply means outside the basket (1) of the centrifuge.

10. A seal arrangement in accordance with any one of the preceding claims 4 to 9, wherein a seal (18, 19) is arranged between a moving running surface, which is formed on a jacket surface of the basket hub (2) and an oppositely disposed stationary running surface (16, 17) which is formed on the jacket surface of the flute tube.

11. A seal arrangement in accordance with any one of the preceding claims, wherein a plurality of seals is provided, wherein at least one of the seals (18, 19) is made as a shaft seal and/or as a lip seal and/or as a peripheral seal.

12. A seal arrangement in accordance with claim 11, wherein the lip seal is arranged around an outer jacket surface of the basket hub (2).

13. A seal arrangement in accordance with any one of the preceding claims 10 to 12, wherein the peripheral speed in the operating state at the contact surface of the seal with the moving running surface lies below 100 m/s, in particular below 75m/s, specifically below 50 m/s, preferably below 40 m/s with grease lubrication and/or amounts to a maximum of 10 m/s, in particular to a maximum of 5 m/s, preferably to a maximum of 1 m/s on a dry run.

14. A seal arrangement in accordance with any one of the preceding claims, wherein intertisation means are provided for the generation and maintenance of an inert gas atmosphere in the space inside the basket hub (2) enclosed by the seals (18, 19).

15. A vertical centrifuge having a bearing arrangement in accordance with any one of the preceding claims.

## Revendications

1. Dispositif d'étanchéité comprenant un tambour (1) d'une centrifugeuse, disposé de manière rotative autour d'un axe de rotation (6), le tambour (1) étant relié, de manière solidaire en rotation, par l'intermédiaire d'un moyeu de tambour (2), avec un arbre d'entraînement (3), couplé à une unité d'entraînement (12), s'étendant le long de l'axe de rotation (6) dans un bloc de palier (4, 7, 8, 9, 20, 24), par l'intermédiaire d'une suspension (21) du tambour (1), un interstice (13) entre le bloc de palier (4, 7, 8, 9, 20, 24) et le moyeu du tambour (2) étant prévu, **caractérisé en ce que**, côté entraînement, entre le moyeu du tambour (2) et le bloc de palier (4, 7, 8, 9, 20, 24), un joint d'étanchéité (18, 19) est prévu pour l'étanchéification de l'interstice (13).

2. Dispositif d'étanchéité selon la revendication 1, le tambour (1) étant logé dans le bloc de palier (4, 7, 8, 9, 20, 24) de façon à ce qu'une force de palier générée par des forces dynamiques est découplée globalement de l'arbre d'entraînement (3) .

3. Dispositif d'étanchéité selon l'une des revendications précédentes, au moins un premier palier (7, 8) étant prévu pour l'absorption des forces dynamiques résultant du mouvement de rotation du tambour, ainsi qu'au moins un deuxième palier (9) pour le guidage de l'arbre d'entraînement (3) .

4. Dispositif d'étanchéité selon la revendication 3, le bloc de palier (4, 7, 8, 9, 20, 24) comprenant un tube d'arbre (4) qui est disposé coaxialement autour de l'arbre d'entraînement (3) et au moins un des paliers (7, 8, 9) est disposé entre le tube d'arbre (4) et le moyeu du tambour (2) .

5. Dispositif d'étanchéité selon l'une des revendications précédentes 3 ou 4, le moyeu du tambour (2) étant fixé de manière solidaire en rotation par l'intermédiaire de la suspension (21) du tambour (1) à une première extrémité (10) de l'arbre d'entraînement et au moins le deuxième palier (9) est disposé à proximité d'une deuxième extrémité (11) sur l'arbre d'entraînement ou du tube d'arbre (4), la deuxième extrémité (11) pouvant être couplée à une unité d'entraînement (12).

6. Dispositif d'étanchéité selon l'une des revendications précédentes, l'arbre d'entraînement (3) étant disposé le long de l'axe de rotation (6) globalement vertical, l'arbre d'entraînement présentant plus particulièrement un diamètre d'arbre de l'ordre de 10 à 300 mm, le diamètre d'arbre se trouvant plus spécifiquement entre 10 et 150 mm, de préférence dans un intervalle de 50 à 150 mm et l'arbre d'entraînement présente une longueur de 400 à 1500 mm, plus particulièrement de 400 à 1000 mm, plus spécifiquement de 500 à 800 mm, de préférence de 600 à 700 mm, le diamètre du tambour étant de l'ordre de 300 à 2500 mm, plus particulièrement de 300 à 2000 mm, de préférence de l'ordre de 400 à 1600 mm.

7. Dispositif d'étanchéité selon l'une des revendications précédentes 3 à 5, l'interstice (13) s'étendant au moins du premier (7, 8) vers le deuxième palier (9) .

8. Dispositif d'étanchéité selon l'une des revendications précédentes, le tambour (1) comprenant au moins une ouverture de sortie pour l'élimination du gâteau de filtre, qui se trouve dans l'environnement de l'interstice (13), une pénétration de poussières et/ou de particules et/ou de gouttelettes et/ou de gaz pouvant être empêchée par le joint d'étanchéité (18, 19).

9. Dispositif d'étanchéité selon l'une des revendications précédentes 4 à 8, une lubrification de palier pouvant être effectuée à travers un alésage dans le tube d'arbre (4), qui peut être relié avec un moyen d'introduction de lubrifiant à l'extérieur du tambour (1) de la centrifugeuse.

10. Dispositif d'étanchéité selon l'une des revendications précédentes 4 à 9, le joint d'étanchéité (18, 19) étant disposé entre une surface de roulement mobile, qui se trouve sur une surface d'enveloppe du moyeu du tambour (2) et une surface de roulement stationnaire (16, 17), qui se trouve sur la surface d'enveloppe du tube d'arbre (4).

11. Dispositif d'étanchéité selon l'une des revendications précédentes, une pluralité de joints d'étanchéité étant prévus, au moins un des joints d'étanchéité (18, 19) étant conçu comme une bague d'étanchéité d'arbre et/ou comme un joint d'étanchéité à lèvres et/ou comme un joint d'étanchéité circulaire.

12. Dispositif d'étanchéité selon la revendication 11, le joint d'étanchéité à lèvres étant disposé autour d'une surface d'enveloppe du moyeu du tambour (2).

13. Dispositif d'étanchéité selon l'une des revendications précédentes 10 à 12, la vitesse circonférentielle dans l'état de fonctionnement au niveau de la surface de contact du joint d'étanchéité avec la surface de roulement mobile est, avec une lubrification, inférieure à 100 m/s, plus particulièrement inférieure à 75 m/s, plus spécifiquement inférieure à 50 m/s, de préférence inférieure à 40 m/s et/ou dans le cas d'une marche à sec, de 10 m/s maximum, plus particulièrement de 5 m/s maximum, de préférence de 1 m/s maximum.

14. Dispositif d'étanchéité selon l'une des revendications précédentes, des moyens d'inertage étant prévus pour la production et le maintien d'une atmosphère à gaz inertes dans l'espace délimité par les joints d'étanchéité (18, 19) à l'intérieur du moyeu du tambour (2).

15. Centrifugeuse avec un dispositif d'étanchéité selon l'une des revendications précédentes.
